# EUROPEAN PATENT SPECIFICATION

(11) **EP 1 382 255 B1**
(45) Date of publication and mention of the grant of the patent: **29.03.2006**
(21) Application number: 02258926.1
(22) Date of filing: 20.12.2002
(51) Int. Cl.: A21B 7/00

(54) **Improvements in and relating to bread makers**
Verbesserungen an Brotbackmaschinen
Améliorations apportées aux machines de fabrication de pain

(30) Priority: 19.07.2002 KR 2002042586
(43) Date of publication of application: 21.01.2004
(73) Proprietor: SAMSUNG ELECTRONICS CO., LTD., Suwon-City, Kyungki-do (KR)
(72) Inventor: Kwon, Yong-hyun, Suwon city, Kyungki-do (KR); Lim, Dong-bin, Paldal-ku, Suwon city, Kyungki-do (KR); Lee, Jang-woo, Suwon city, Kyungki-do (KR)
(74) Representative: Brandon, Paul Laurence

(56) References cited:
- US-A- 4 803 086
- US-A- 5 146 840
- US-A- 5 947 009

## Description

The present invention relates to bread makers, method of controlling a bread maker and to sensors for a bread maker.

Generally, making bread is so complicated that it is difficult for an average person to manually make satisfactory bread at home. That is, making the bread includes multiple steps of mixing ingredients such as flour, sugar, yeast, etc. to form a dough; kneading the dough, leavening the dough; baking the dough; and so on.

Therefore, various bread makers have been developed to allow a user to easily make bread. The bread maker automatically performs the foregoing multiple steps and provides finished bread to the user.

For example, a bread maker disclosed in Korean Patent Publication No. KR-A-1991-10203 includes a pair of parallel kneading drums at upper and lower parts of an oven compartment that reverse rotary direction periodically, a baking tray between the pair of kneading drums, a heater heating the inside of the oven compartment, a bar code scanner, etc.

In the bread maker, disclosed in Korean Patent Publication No. KR-A-1991-10203, upper and lower ends of a mixing bag filled with flour, water, etc., are attached to the upper and lower kneading drums, and then the mixing bag is reciprocated up and down for a predetermined period of time, thereby kneading the dough in the mixing bag.

After completing the kneading of the dough, the mixing bag is automatically separated from the upper kneading drum, and wound on the lower kneading drum, with the dough being squeezed out of the mixing bag and into the baking tray. Thereafter, a heater heats the inside of the oven compartment, thereby leavening and baking the dough for a predetermined period of time.

The bread is made according to a bar code that is printed on the mixing bag that includes information on kneading time, leavening time, baking time, etc., for a particular recipe. That is, the bar code is read by the bar code scanner and the read data are transmitted to a controller, so that the controller controls the kneading drums, the heater, etc., on the basis of the read data.

However, in the conventional bread maker, if high-priced electric components such as a motor, etc., are overloaded while being employed in kneading the dough, an overload current flows in the high-priced electric components, so that the high-priced electric components are damaged.

US-A-5947009 discloses the precharacterising portions of claims 1 and 14 herein.

It is an aim of preferred embodiments of the present invention to provide a bread maker capable of protecting electric components, such as a motor, from overload damage.

According to the present invention, there is provided a bread maker including an oven compartment and an electric component compartment, a pair of parallel kneading drums inside the oven compartment to which are attachable opposite ends of a mixing bag containing bread ingredients, the kneading drums reversing rotary direction periodically, and a drum driving part in the electric component compartment rotating the kneading drums, characterised by the bread maker comprising: a rotation sensing part sensing a rotation rate of one of the kneading drums; and a controller stopping the drum driving part when the sensed rotation rate is greater than a predetermined rotation rate.

Suitably, the rotation sensing part includes a disk part rotating with the one of the kneading drums, and having at least one projection radially extending from a circumference thereof; and a disk sensor emitting a light toward the disk part and outputting a pulse signal according to interruption of the light by rotation of the at least one projection of the disk part.

Suitably, the disk part includes a first disk having a single projection and a second disk having a plurality of projections at regular intervals.

Suitably, the disk sensor comprises a light emitting part and a light receiving part facing each other with the disk part therebetween, the disk sensor, outputting a pulse signal when the at least one projection of the disk part interrupts light emitted from the light emitting part to the light receiving part.

Suitably, the controller provides a warning when a pulse width of the pulse signal output from the disk sensor is greater than a predetermined pulse width.

According to another aspect of the present invention, there is provided a method of controlling a bread maker having an oven compartment and an electric component compartment, a pair of parallel kneading drums inside the oven compartment to which are attached opposite ends of a mixing bag containing bread ingredients, the kneading drums reversing rotary direction periodically, and a drum driving part in the electric component compartment rotating the kneading drums, characterised by the method comprising: sensing a rotation rate of one of the kneading drums; and stopping the drum driving part when the sensed rotation rate is greater than a predetermined rotation rate.

Suitably, the bread maker further includes a disk part rotating with the one of the kneading drums and having a plurality of projections around a circumference thereof at regular intervals; and a disk sensor outputting a pulse signal according to interruption, by the projections of the disk part, of light emitted toward the disk part.

Suitably, the rotation rate is sensed by determining a pulse width of the pulse signal, and a warning is provided when the pulse width is greater than a predetermined pulse width.

Further features of the present invention are set out in the appended claims.

These together with other aspects and advantages which will be subsequently apparent, reside in the details of construction and operation as more fully hereinafter described and claimed, reference being had to the accompanying drawings forming a part thereof, wherein like numerals refer to like parts throughout.

The present invention will become apparent and more readily appreciated from the following description of the embodiments, by way of example only, taken in conjunction with the accompany drawings, of which:
Figure 1 is a perspective view of a bread maker according to an embodiment of the present invention;
Figure 2 is a perspective view of an electric component compartment of the bread maker shown in Figure 1;
Figure 3 is an exploded perspective view of a portion of the electric component compartment of Figure 2;
Figure 4 is a perspective view of a mixing bag used in the bread maker according to the embodiment of the present invention;
Figure 5 is a control block diagram of the bread maker according to the embodiment of the present invention;
Figures 6A and 6B illustrate pulse signals output from a rotation sensor according to the embodiment of the present invention; and
Figure 7 is a flowchart illustrating control of the bread maker according to the embodiment of the present invention.

Hereinafter, an embodiment of the present invention will be described in detail with reference to the attached drawings, wherein the like reference numerals refer to the like elements throughout. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

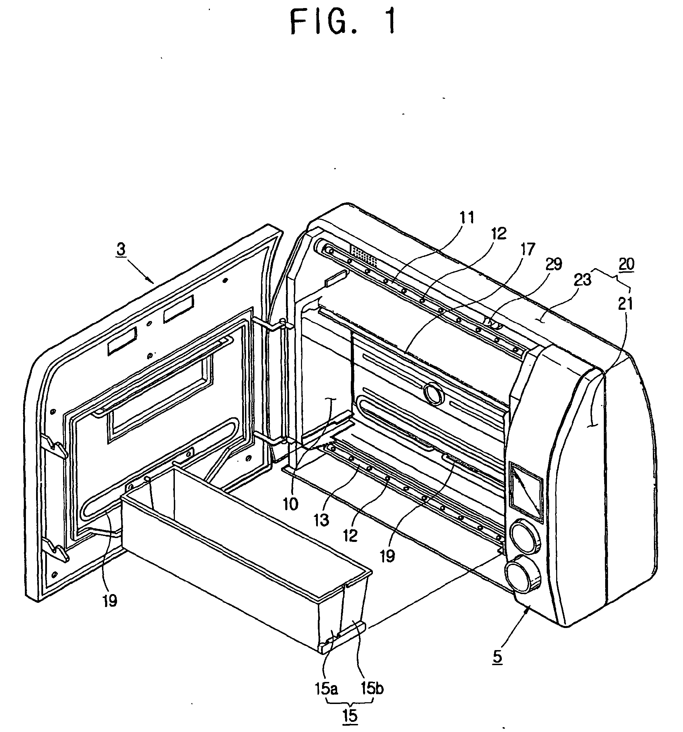

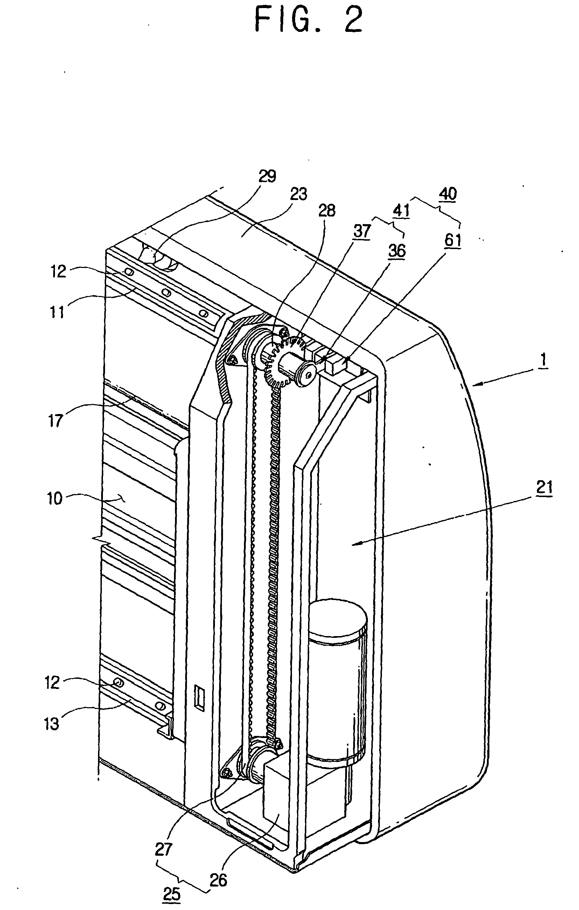

As shown in Figures 1 through 3, a bread maker according to an embodiment of the present invention includes a main body 1 divided into an oven compartment 10 and an electric component compartment 20, a door 3 in the front of the main body 1 to open and close the oven compartment 10, a control panel 5 in the front of the main body 1 allowing a user to control the bread maker and know the state of the bread maker.

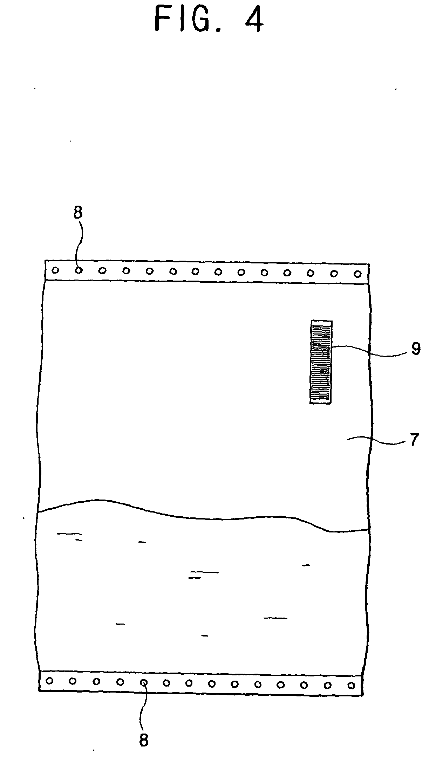

Inside the oven compartment 10, upper and lower kneading drums 11 and 13 are rotatably provided in parallel. Opposite ends 8 of a mixing bag 7 (refer to Figure 4) filled with raw materials (ingredients) for the bread are attached to projections 12 on the upper and lower kneading drums 11 and 13, and the mixing bag 7 is wound on the upper and lower kneading drums 11 and 13.

In a lower part of the oven compartment 10, there is a baking tray 15 in which the dough is baked between the upper and lower kneading drums 11 and 13. The baking tray 15 includes first and second trays 15a and 15b, each having an "L"-shaped section symmetrical to one another that combine into a box shape having an open top. In an upper part of the oven compartment 10, a pair of squeezing members 17 is between the upper kneading drum 11 and the baking tray 15 to squeeze an upper part of the mixing bag 7 inside the baking tray 15.

At upper and lower parts of the inside walls of the oven compartment 10 and the door 3 are heaters 19 for heating the inside of the oven compartment 10.

The electric component compartment 20 includes a first component compartment 21 placed beside the oven compartment 10 and a second component compartment 23 placed behind the oven compartment 10. Inside the first component compartment 21 is a drum driving part 25 that rotates the upper and lower kneading drums 11 and 13 in clockwise and counterclockwise directions. Inside the second component compartment 23 is a bar code scanner 29 that reads a bar code 9 printed on or applied to the mixing bag 7 that is wound on the upper and lower kneading drums 11 and 13. The bar code scanner 29 may move close to, and distantly from, an outer circumference of the upper kneading drum 11.

The drum driving part 25 includes a motor 26 that rotates the lower kneading drum 13, and a belt 27 that transmits a rotary movement of the lower kneading drum 13 to a rotation shaft 28 of the upper kneading drum 11.

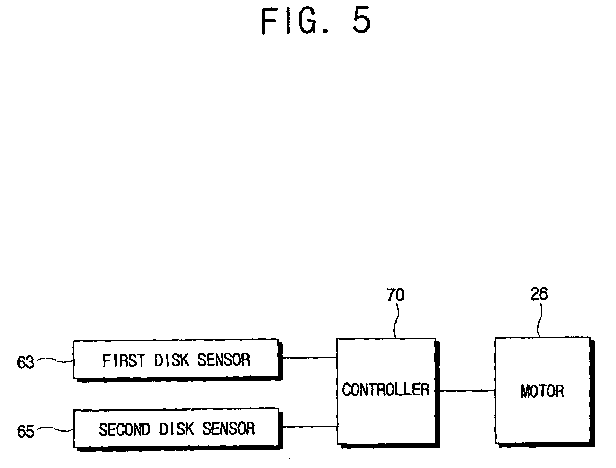

A rotation sensing part 40 senses rotation of at least one of the upper and lower kneading drums 11 and 13, and a controller 70 (Figure 5) stops the drum driving part 25 when a pulse signal output from the rotation sensing part 40 is greater than a predetermined allowable pulse width.

The rotation sensing part 40 includes a disk part 41 attached to the rotation shaft 28 of the upper kneading drum 11, and a rotation sensor 61 adjacent to the disk part 41 that outputs a pulse signal by sensing the rotation of the disk part 41.

The disk part 41 includes a first disk 36 that allows the rotation sensor 61 to sense one turn of the upper kneading drum 11, and a second disk 37 that allows the rotation sensor 61 to sense a rotation of the upper kneading drum 11 that is less than one complete turn.

The first disk 36 is a circular plate 43, which is separated from the second disk 37 by a cylindrical part 52 and connected to the rotation shaft 28 of the upper kneading drum 11 using a washer 54 and a bolt 56. The circular plate 43 is formed with one projection 44 radially extended therefrom. Hence, the first disk 36 rotates with the upper kneading drum 11 and allows the rotation sensor 61 to sense one turn of the upper kneading drum 11.

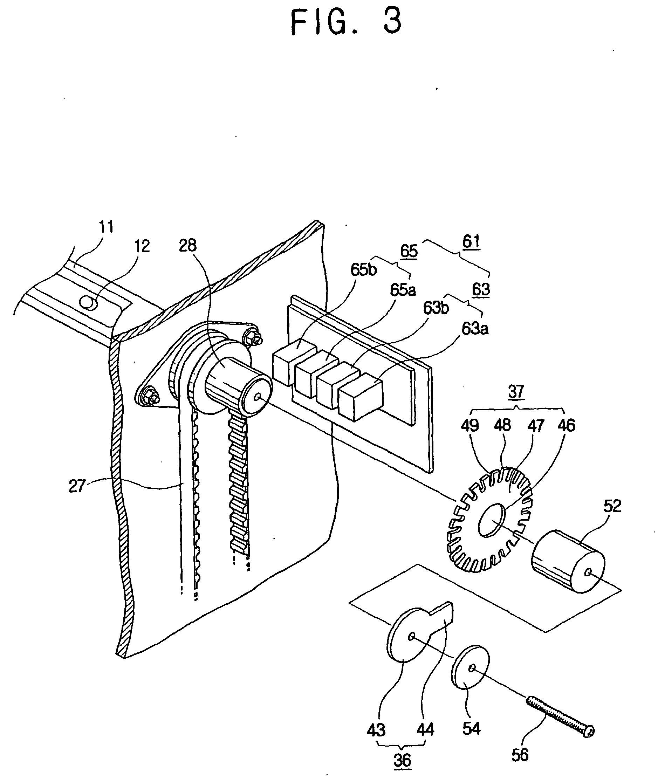

The second disk 37 is a circular plate 47 with a shaft combining hole 46 used to attach the circular plate 47 to the rotation shaft 28 of the upper kneading drum 11. The circular plate 47 has a plurality of slots 49 along the circumference thereof at regular intervals, forming a plurality of projections 48. For example, in the embodiment shown in Figure 3, the second disk 37 has twenty-four slots 49, forming twenty-four projections 48. Hence, the second disk 37 rotates with the upper kneading drum 11 and allows the rotation sensor 61 to sense a rotation of the upper kneading drum 11 that is less than one complete turn.

The rotation sensor 61 includes a first disk sensor 63 sensing the one projection 44 of the first disk 36 and outputting one pulse signal per one turn of the upper kneading drum 11, and a second disk sensor 65 sensing the twenty-four projections 48 of the second disk 37 and outputting twenty-four pulse signals per one complete turn of the upper kneading drum 11. That is, while the upper kneading drum 11 makes one complete turn, the first and second disk sensors 63 and 65 output one and twenty-four pulse signals, respectively.

The first and second disk sensors 63 and 65 include light emitting parts 63a and 65a that emit a sensing signal such as infrared rays to the first and second disks 36 and 37, and light receiving parts 63b and 65b that face the light emitting parts 63a and 65a, respectively, across the first and second disks 36 and 37 and receive the light emitted from the light emitting parts 63a and 65a, respectively.

The first disk sensor 63 senses when the one projection 44 of the first disk 36 interrupts the light emitted from the light emitting part 63a to the light receiving part 63b, thereby outputting one pulse signal per one complete turn of the upper kneading drum 11.

The second disk sensor 65 senses when the twenty-four projections 48 of the second disk 37 interrupt the light emitted from the light emitting part 65a to the light receiving part 65b, thereby outputting twenty-four pulse signals per one complete turn of the upper kneading drum 11.

The rotation sensor 61 transmits the pulse signals output from the first and second disk sensors 63 and 65 to the controller 70, and the controller 70 determines a rotation rate of the upper kneading drum 11 on the basis of the output pulse signals. Thus, the controller 70 controls the motor 26 of the drum driving part 25 to rotate the upper and lower kneading drums 11 and 13 according to the determined rotation rate thereof, thereby causing the mixing bag 7 to be properly reciprocated up and down. At this time, if the pulse signals output from the first and second disk sensors 63 and 65 are greater than a predetermined allowable pulse width, the controller 70 determines that an overload current flows in the electric components, such as the motor 26, because the electric components have become overloaded while kneading the mixing bag 7.

Thus, as shown in Figure 5, the bread maker according to the embodiment of the present invention includes the first and second disk sensors 63 and 65 sensing the rotation of the first and second disks 36 and 37, and the controller 70 receiving the pulse signals output from the first and second disk sensors 63 and 65 and stopping the motor 26 when the received pulse signals are greater than a predetermined allowable pulse width.

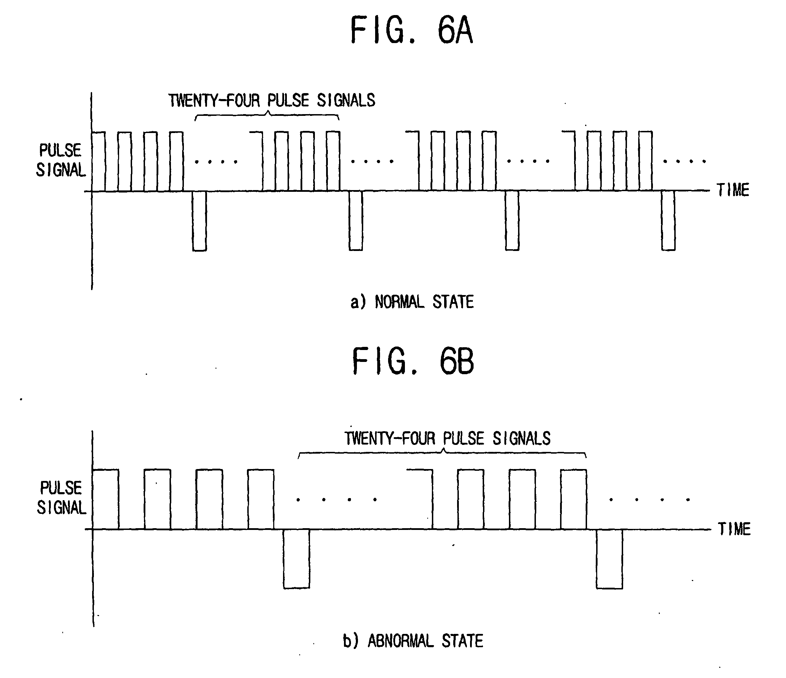

Figures 6A and 6B illustrate the pulse signals output from the first and second disk sensors 63 and 65. As shown therein, while the upper kneading drum 11 makes one complete turn, the first and second disk sensors 63 and 65 output one and twenty-four pulse signals, respectively.

In a normal state, the light receiving part 65b of the second disk sensor 65 outputs one pulse signal per 1 msec (millisecond). However, in an abnormal state, that is, when the motor 26 is overloaded while kneading the dough contained in the mixing bag 7, the light receiving part 65b outputs one pulse signal per unit of time that is greater than 1 msec. In other words, in the abnormal state, the first and second disks 36 and 37 rotate slower than in the normal state, so that in the abnormal state a pulse width is larger than in the normal state. The pulse width indicates a load applied to the motor 26, so that the larger the pulse width, the higher the current that flows in the electric components of the drum driving part 25, which may damage the motor 26.

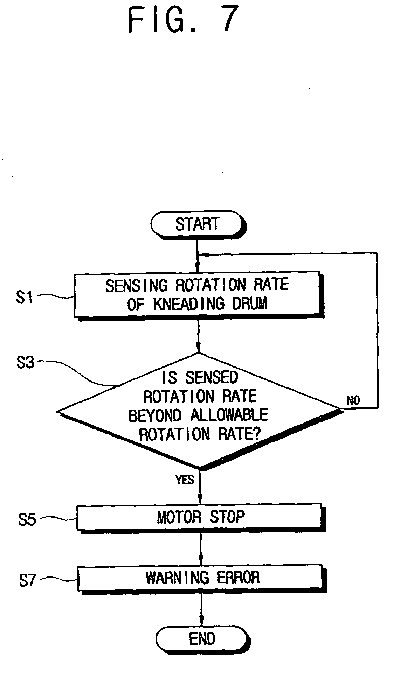

The bread maker according to the embodiment of the present invention is controlled as follows. Referring to Figure 7, first, the pulse width is determined by sensing the second disk 37 while the upper kneading drum 11 rotates (S1). Then, it is determined whether the pulse width is greater than a predetermined allowable pulse width (S3). If the pulse width is greater than the predetermined allowable pulse width, the bread maker is determined to be operating in the abnormal state, and the motor 26 (S5) is stopped. Then, the control panel 5 displays a warning about the abnormal state (S7).

According to the embodiment of the present invention, the first and second disk sensors 63 and 65 sense the rotation of the first and second disks 36 and 37 that rotate with the upper kneading drum 11, and output the pulse signals to the controller 70, so that the controller 70 can stop the motor 26 when the pulse width of the output pulse signals is greater than a predetermined allowable pulse width, thereby protecting the electric components, such as the motor 26, from overload damage.

As described above, the embodiment of the present invention provides a bread maker capable of protecting electric components such as a motor from overload damage.

Although an embodiment of the present invention has been shown and described, it will be appreciated by those skilled in the art that changes may be made in this embodiment without departing from the principles of the invention, the scope of which is defined in the appended claims.

## Claims

1. A bread maker having an oven compartment (10) and an electric component compartment (20), a pair of parallel kneading drums (11, 13) inside the oven compartment (20) to which are attachable opposite ends of a mixing bag (7) containing bread ingredients, the kneading drums (11, 13) reversing rotary direction periodically, and a drum driving part (25) in the electric component compartment (20) rotating the kneading drums (11, 13), **characterised by** the bread maker comprising:
a rotation sensing part (40) sensing a rotation rate of one of the kneading drums (11, 13); and
a controller (70) stopping the drum driving part (25) when the sensed rotation rate is greater than a predetermined rotation rate.

2. The bread maker according to claim 1, wherein the rotation sensing part (40) comprises:
a disk part (41) rotating with the one of the kneading drums (11, 13), and having at least one projection (44, 48) radially extending from a circumference thereof; and
a disk sensor (63, 65) emitting a light toward the disk part (41) and outputting a pulse signal according to interruption of the light by rotation of the at least one projection (44, 48) of the disk part (41).

3. The bread maker according to claim 2, wherein the disk part (41) comprises:
a first disk (36) having a single projection (44); and
a second disk (37) having a plurality of projections (48) at regular intervals.

4. The bread maker according to claim 3, wherein the disk sensor (63, 65) comprises a light emitting part (63a, 65a) and a light receiving part (63b, 65b) facing each other with the disk part (41) therebetween, the disk sensor (63, 65) outputting a pulse signal when the at least one projection (44,48) of the disk part (41) interrupts light emitted from the light emitting part (63a, 65a) to the light receiving part (63b, 65b).

5. The bread maker according to claim 4, wherein the controller (70) provides a warning when a pulse width of the pulse signal output from the disk sensor (63, 65) is greater than a predetermined pulse width.

6. The bread maker according to any one of claims 2-5, wherein the disk part (41) is attached to a rotation shaft (28) of the one of the kneading drums (11, 13).

7. The bread maker according to any one of claims 3-5 or claim 6 when dependent from claim 9, wherein the disk sensor (63, 65) senses one revolution of the one of the kneading drums (11, 13) using the first disk (36), and the disk sensor (63, 65) senses rotation of the one of the kneading drums (11, 13) that is less than one revolution using the second disk (37).

8. The bread maker according to any one of claims 3, 5 or claim 6 or claim 7 when dependent from claim 3, wherein the disk sensor (63, 65) outputs one pulse signal per revolution of the one of the kneading drums (11, 13), and outputs a number of pulse signals per revolution of the one of the kneading drums (11, 13) equal to the number of projections (48) on the second disk (37).

9. The bread maker according to any one of claims 3-5 or any one of claims 608 when dependent from claim 3, wherein the kneading drums (11, 13) comprise an upper kneading drum (11) and a lower kneading drum (13).

10. The bread maker according to claim 9, wherein the drum driving part (25) comprises a motor (26) to rotate the lower kneading drum (13) and a belt (27)connecting the lower kneading drum (13) to the upper kneading drum (11), the belt (27) transmitting a rotary movement of the lower kneading drum (13) to the upper kneading drum (11).

11. The bread maker according to claim 10, wherein the controller (70) determines a rotation rate of the upper kneading drum (11) using the output pulse signals and controls the motor (26) to rotate the upper kneading drum (11) and the lower kneading drum (13) according to the determined rotation rate.

12. The bread maker according to claim 10 or claim 11, wherein when the pulse width of the pulse signals is greater than the predetermined pulse width, the controller (70) determines a state of the bread maker to be abnormal and that the motor (26) is overloaded, with the first disk (36) and the second disk rotating slower than rotation thereof in a normal state.

13. The bread maker according to any one of claims 10-12, wherein the pulse width indicates a load applied to the motor (26), and the pulse width is proportional to a load current.

14. A method of controlling a bread maker having an oven compartment (10) and an electric component compartment (20), a pair of parallel kneading drums (11, 13) inside the oven compartment (20) to which are attached opposite ends of a mixing bag (7) containing bread ingredients, the kneading drums (11, 13) reversing rotary direction periodically, and a drum driving part (25) in the electric component compartment (20) rotating the kneading drums (11, 13), **characterised by** the method comprising:
sensing a rotation rate of one of the kneading drums (11, 13); and
stopping the drum driving part (25) when the sensed rotation rate is greater than a predetermined rotation rate.

15. The method according to claim 14, wherein the bread maker comprises:
a disk part (41) rotating with the one of the kneading drums (11, 13) and having a plurality of projections (44, 48 around a circumference thereof at regular intervals; and
a disk sensor (63, 65) outputting a pulse signal according to interruption, by the projections (44, 48) of the disk part, of light emitted toward the disk part (41).

16. The method according to claim 15, wherein sensing a rotation rate comprises determining a pulse width of the pulse signal.

17. The method according to claim 16, further comprising providing a warning when the pulse width is greater than a predetermined pulse width.

18. The method according to any one of claims 15-17, wherein the disk part (41) comprises:
a first disk (36) having a single projection (44); and
a second disk (37) having a plurality of projections (48) at regular intervals.

19. The method according to claim 18, wherein the disk sensor (63, 65) comprises a light emitting part (63a, 65a) and a light receiving part (63b, 65b) facing each other with the disk part (41) therebetween, the disk sensor (63, 65) outputting a pulse signal when the at least one projection (44, 48) of the disk part (41) interrupts light emitted from the light emitting part (63a, 65a) to the light receiving part (63b, 65b).

20. The method according to claim 18 or claim 19, wherein the disk sensor (63, 65) senses one revolution of the one of the kneading drums (11, 13) using the first disk (36), and the disk sensor (63, 65) senses rotation of the one of the kneading drums (11, 13) that is less than one revolution using the second disk (37), and the disk sensor (63, 65) outputs one pulse signal per revolution of the one of the kneading drums (11, 13), and outputs a number of pulse signals per revolution of the one of the kneading drums (11, 13) equal to the number of projections (48) on the second disk.

21. The method according to any one of claims 18-20, wherein the kneading drums (11, 13) comprise an upper kneading drum (11) and a lower kneading drum (13).

22. The method according to claim 21, wherein the drum driving part (25) comprises a motor (26) to rotate the lower kneading drum (13) and a belt (27) connecting the lower kneading drum (13) to the upper kneading drum (11), the belt (27) transmitting a rotary movement of the lower kneading drum (13) to the upper kneading drum (11).

23. The method according to claim 22, wherein the controller (70) determines a rotation rate of the upper kneading drum (11) using the output pulse signals and controls the motor (26) to rotate the upper kneading drum (11) and the lower kneading drum (13) according to the determined rotation rate.

24. The method according to claim 22 or claim 23, wherein when the pulse width of the pulse signals is greater than the predetermined pulse width, the controller (70) determines a state of the bread maker to be abnormal and that the motor (26) is overloaded, with the first disk (36) and the second disk (37) rotating slower than rotation thereof in a normal state.

## Revendications

1. Machine de fabrication de pain comportant un compartiment formant four (10) et un compartiment électrique (20), deux tambours de pétrissage parallèles (11, 13) situés à l'intérieur du compartiment formant four (20) et auxquels peuvent être fixées des extrémités opposées d'un sac de mélange (7) contenant des ingrédients pour faire du pain, le sens de rotation des tambours de pétrissage (11, 13) étant inversé périodiquement, et une partie d'entraînement de tambours (25) située dans le compartiment électrique (20) et entraînant les tambours de pétrissage (11, 13) en rotation, **caractérisée en ce que** la machine de fabrication de pain comprend :
une partie de détection de rotation (40) détectant une vitesse de rotation d'un premier des tambours de pétrissage (11, 13) ; et
un dispositif de commande (70) arrêtant la partie d'entraînement de tambours (25) lorsque la vitesse de rotation détectée est supérieure à une vitesse de rotation prédéterminée.

2. Machine de fabrication de pain selon la revendication 1, dans laquelle la partie de détection de rotation (40) comprend :
une partie à disques (41) tournant avec le premier des tambours de pétrissage (11, 13) et comportant au moins une protubérance (44, 48) s'étendant radialement à partir de sa circonférence ; et
un détecteur de disques (63, 65) émettant une lumière vers la partie à disques (41) et délivrant un signal impulsionnel en fonction d'une interruption de la lumière par la rotation de la protubérance (44, 48) de la partie à disques (41).

3. Machine de fabrication de pain selon la revendication 2, dans laquelle la partie à disques (41) comprend :
un premier disque (36) comportant une protubérance unique (44) ; et
un deuxième disque (37) comportant plusieurs protubérances (48) situées à intervalles réguliers.

4. Machine de fabrication de pain selon la revendication 3, dans laquelle le détecteur de disques (63, 65) comprend une partie émettrice de lumière (63a, 65a) et une partie réceptrice de lumière (63b, 65b) se faisant face et entre lesquelles est située la partie à disques (41), le détecteur de disques (63, 65) délivrant un signal impulsionnel lorsque l'une au moins des protubérances (44, 48) de la partie à disques (41) interrompt la lumière émise par la partie émettrice de lumière (63a, 65a) vers la partie réceptrice de lumière (63b, 65b).

5. Machine de fabrication de pain selon la revendication 4, dans laquelle le dispositif de commande (70) délivre un signal d'avertissement lorsqu'une largeur d'impulsion du signal impulsionnel délivré par le détecteur de disques (63, 65) est supérieure à une largeur d'impulsion prédéterminée.

6. Machine de fabrication de pain selon l'une quelconque des revendications 2 à 5, dans laquelle la partie à disques (41) est reliée à un arbre de rotation (28) du premier des tambours de pétrissage (11, 13).

7. Machine de fabrication de pain selon l'une quelconque des revendications 3 à 5 ou la revendication 6 lorsqu'elle dépend de la revendication 9, dans laquelle le détecteur de disques (63, 65) détecte un tour du premier des tambours de pétrissage (11, 13) en utilisant le premier disque (36) et une rotation du premier des tambours de pétrissage (11, 13) qui est inférieure à un tour en utilisant le deuxième disque (37).

8. Machine de fabrication de pain selon l'une quelconque des revendications 3, 5 ou 6 ou la revendication 6 lorsqu'elle dépend de la revendication 3, dans laquelle le détecteur de disques (63,65) délivre un signal impulsionnel par tour du premier des tambours de pétrissage (11, 13) et un nombre de signaux impulsionnels par tour du premier des tambours de pétrissage (11, 13) égal au nombre de protubérances (48) du deuxième disque (37).

9. Machine de fabrication de pain selon l'une quelconque des revendications 3 à 5 ou l'une quelconque des revendications 6 à 8 lorsqu'elles dépendent de la revendication 3, dans laquelle les tambours de pétrissage (11, 13) comprennent un tambour de pétrissage supérieur (11) et un tambour de pétrissage inférieur (13).

10. Machine de fabrication de pain selon la revendication 9, dans laquelle la partie d'entraînement de tambour (25) comprend un moteur électrique (26) pour faire tourner le tambour de pétrissage inférieur (13) et une courroie (27) reliant le tambour de pétrissage inférieur (13) au tambour de pétrissage supérieur (11), la courroie (27) transmettant un mouvement rotatif du tambour de pétrissage inférieur (13) au tambour de pétrissage supérieur (11).

11. Machine de fabrication de pain selon la revendication 10, dans laquelle le dispositif de commande (70) détermine une vitesse de rotation du tambour de pétrissage supérieur (11) en utilisant les signaux impulsionnels de sortie et commande le moteur électrique (26) pour faire tourner le tambour de pétrissage supérieur (11) et le tambour de pétrissage inférieur (13) en fonction de la vitesse de rotation pré-déterminée.

12. Machine de fabrication de pain selon la revendication 10 ou la revendication 11, dans laquelle, lorsque la largeur d'impulsion des signaux impulsionnels est supérieure à la largeur d'impulsion prédéterminée, le dispositif de commande (70) détermine que la machine de fabrication de pain est dans un état anormal et que le moteur électrique (26) est en surcharge, le premier disque (36) et le deuxième disque tournant plus lentement que dans un état normal.

13. Machine de fabrication de pain selon l'une quelconque des revendications 10 à 12, dans laquelle la largeur d'impulsion indique une charge appliquée au moteur électrique (26), la largeur d'impulsion étant proportionnelle à un courant de charge.

14. Procédé de commande d'une machine de fabrication de pain comportant un compartiment formant four (10) et un compartiment électrique (20), deux tambours de pétrissage parallèles (11, 13) situées à l'intérieur du compartiment formant four (20) et auxquels peuvent être fixées des extrémités opposées d'un sac de mélange (7) contenant des ingrédients pour faire du pain, le sens de rotation des tambours de pétrissage (11, 13) étant inversé périodiquement, et une partie d'entraînement de tambours (25) située dans le compartiment électrique (20) et entraînant les tambours de pétrissage (11, 13) en rotation, **caractérisé en ce que** le procédé comprend :
la détection d'une vitesse de rotation d'un premier des tambours de pétrissage (11, 13) ; et
l'arrêt de la partie d'entraînement de tambours (25) lorsque la vitesse de rotation détectée est supérieure à une vitesse de rotation prédéterminée.

15. Procédé selon la revendication 14, dans lequel la machine de fabrication de pain comprend :
une partie à disques (41) tournant avec le premier des tambours de pétrissage (11, 13) et comportant plusieurs protubérances (44, 48) situées à intervalles réguliers autour de sa circonférence ; et
un détecteur de disques (63, 65) délivrant un signal impulsionnel en fonction d'une interruption, par les protubérances (44, 48) de la partie à disques (41), de la lumière émise vers celle-ci.

16. Procédé selon la revendication 15, dans lequel la détection d'une vitesse de rotation comprend la détermination d'une largeur d'impulsion du signal impulsionnel.

17. Procédé selon la revendication 16, comprenant en outre l'émission d'un signal d'avertissement lorsque la largeur d'impulsion est supérieure à une largeur d'impulsion prédéterminée.

18. Procédé selon l'une quelconque des revendications 15 à 17, dans lequel la partie à disques (41) comprend :
un premier disque (36) comportant une protubérance unique (44) ; et
un deuxième disque (37) comportant plusieurs protubérances (48) situées à intervalles réguliers.

19. Procédé selon la revendication 18, dans lequel le détecteur de disques (63, 65) comprend une partie émettrice de lumière (63a, 65a) et une partie réceptrice de lumière (63b, 65b) se faisant face et entre lesquelles est située la partie à disques (41), le détecteur de disques (63, 65) délivrant un signal impulsionnel lorsque l'une au moins des protubérances (44, 48) de la partie à disques (41) interrompt la lumière émise par la partie émettrice de lumière (63a, 65a) vers la partie réceptrice de lumière (63b, 65b).

20. Procédé selon la revendication 18 ou la revendication 19, dans lequel le détecteur de disques (63, 65) détecte un tour du premier des tambours de pétrissage (11, 13) en utilisant le premier disque (36) et une rotation du premier des tambours de pétrissage (11, 13) qui est inférieure à un tour en utilisant le deuxième disque (37), et délivre un signal impulsionnel par tour du premier des tambours de pétrissage (11, 13), et un nombre de signaux impulsionnels par tour du premier des tambours de pétrissage (11, 13) égal au nombre de protubérances (48) du deuxième disque.

21. Procédé selon l'une quelconque des revendications 18 à 20, dans lequel les tambours de pétrissage (11, 13) comprennent un tambour de pétrissage supérieur (11) et un tambour de pétrissage inférieur (13).

22. Procédé selon la revendication 9, dans lequel la partie d'entraînement de tambours (25) comprend un moteur électrique (26) pour faire tourner le tambour de pétrissage inférieur (13) et une courroie (27) reliant le tambour de pétrissage inférieur (13) au tambour de pétrissage supérieur (11), la courroie (27) transmettant un mouvement rotatif du tambour de pétrissage inférieur (13) au tambour de pétrissage supérieur (11).

23. Procédé selon la revendication 22, dans lequel le dispositif de commande (70) détermine une vitesse de rotation du tambour de pétrissage supérieur (11) en utilisant les signaux impulsionnels de sortie et commande le moteur électrique (26) pour faire tourner le tambour de pétrissage supérieur (11) et le tambour de pétrissage inférieur (13) en fonction de la vitesse de rotation prédéterminée.

24. Procédé selon la revendication 22 ou la revendication 23, dans lequel, lorsque la largeur d'impulsion des signaux impulsionnels est supérieure à la largeur d'impulsion prédéterminée, le dispositif de commande (70) détermine que la machine de fabrication de pain est dans un état anormal et que le moteur électrique (26) est en surcharge, le premier disque (36) et le deuxième disque (37) tournant plus lentement que dans un état normal.

## Patentansprüche

1. Brotbackmaschine, die eine Ofenkammer (10) und eine Kammer (20) für elektrische Bauteile, ein Paar paralleler Knetwalzen (11, 13) im Inneren der Ofenkammer (20), an denen einander gegenüberliegende Enden eines Mischbeutels (7) angebracht werden können, der Brotzutaten enthält, wobei die Knetwalzen (11, 13) die Drehrichtung periodisch umkehren, und einen Walzenantriebsteil (25) In der Kammer (20) für elektrische Bauteile hat, der die Knetwalzen (11, 13) dreht, **dadurch gekennzeichnet, dass** die Brotbackmaschine umfässt:
einen Drehungsertassungsteil (40), der eine Drehgeschwlndlgkeit einer der Knet-walzen (11, 13) erfasst: und
eine Steuereinrichtung (70), die den Walzenantriebsteil (26) anhält, wenn die erfasste Drehgeschwindigkeit höher ist als eine vorgegebene Drehgeschwindigkeit.

2. Brotbackmaschine nach Anspruch 1, wobei der Drehungserfassungsteil (40) umfässt:
einen Scheibenteil (41), der sich mit einer der Knetwalzen (11, 13) dreht und wenigstens einen Vorsprung (44. 48) hat, der sich radial von einem Umfang desselben erstreckt; und
einen Scheibensensor (63, 65), der ein Licht auf den Scheibenteil (41) zu emittiert und entsprechend der Unterbrechung des Lichts durch die Drehung des wenigstens einen Vorsprungs (44, 48) des Scheibenteils (41) ein Impulasignal ausgibt.

3. Brotbackmaschine nach Anspruch 2, wobei der Scheibenteil (41) umfast:
eine erste Scheibe (36), die einen einzelnen Vorsprung (44) aufweist; und
eine zweite Scheibe (37), die eine Vielzahl von Vorsprüngen (48) in gleichmäßigen Abständen aufweist.

4. Brotbackmaschine nach Anspruch 3, wobei der Scheibensensor (63, 65) einen itchtm notierenden Tell (63a, 05a) und einen lichtempfangenden Teil (63b, 65b) umfasst, die einander zugewandt sind, sich der Scheibentelt (41) zwischen ihnen befindet und der Scheibensensor (63, 65) ein Impulssignal ausgibt wenn der wenigstens eine Vorsprung (44, 48) des Scheibenteils (41) von dem lichtemittierenden Teil (63a, 65a) zu dem lichtermpfangenden Tell (63b. 65b) emittiertes Licht unterbricht.

5. Brotbackmaschine nach Anspruch 4, wobei die Steuereinrichtung (70) eine Warnung erzeugt, wenn eine Impulsbreite des von dem Scheibensensor (63, 65) ausgegebenen lmpulssignals größer ist als eine vorgegebene Impulsbreite.

6. Brotbackmaschine nach einem der Ansprüche 2 - 5, wobei der Scheibenteil (41) an einer Drehwelle (28) der einen der Knetwalzen **(11, 13)** angebracht ist.

7. Brotbackmaschine nach einem der Ansprüche 3 - 5 oder Anspruch 6, wenn abhängig von Anspruch 9, wobei der Scheibensensor (83, 65) eine Umdrehung der einen der Knetwalzen (11, 13) unter Verwendung der ersten Scheibe (36) erfasst, und der Scheibensensor (63, 65) Drehung der einen der Knetwalzen (11, 13), die kürzer ist als eine Umdrehung, unter Verwendung der zweiten Scheibe (37) erfasst.

8. Brotbackmaschine nach einem der Ansprüche 3, 5 oder Anspruch 6 oder Anspruch 7, wenn abhängig von Anspruch 3, wobei der Schelbensensor (63, 65) ein Impulssignal pro Umdrehung der einen der Knetwalzen (11, 13) ausgibt und eine Anzahl von lmpulssignalen pro Umdrehung der einen der Knetwalzen (11, 13) ausgibt, die der Anzahl von Vorsprüngen (48) an der zweiten Scheibe (37) entspricht.

9. Brotbackmaschine nach einem der Ansprüche 3 - 6 oder einem der Ansprüche 6 oder 8, wenn abhängig von Anspruch 3, wobei die Knetwalzen (11, 13) eine obere Knetwalze (11) und eine untere Knetwalze (13) umfassen.

10. Brotbackmaschine nach Anspruch 9, wobei der Walzenantriebsteil (25) einen Motor (26), der die untere Knetwalze (13) dreht, sowie einen Riemen (27) umfasst, der die untere Knetwalze (13) mit der oberen Knetwalze (11) verbindet, und der Riemen (27) eine Drehbewegung der unteren Knetwalze (13) auf die obere Knetwalze (11) überträgt.

11. Brotbackmaschine nach Anspruch 10, wobei die Steuereinrichtung (70) eine Drehgeschwindigkeit der oberen Knetwalze (11) unter Verwendung der Ausgangs-Impulssignale bestimmt und den Motor (26) so steuert, dass er die obere Knetwalze (11) und die untere Knetwatze (13) entsprechend der bestimmten Drehgeschwindigkeit dreht.

12. Brotbackmaschine nach Anspruch 10 oder Anspruch 11, wobei, wenn die Impulsbreite der Impulssignale größer ist als die vorgegebene Impulsbrelte, die Steuereinrichtung (70) feststellt, dass ein Zustand der Brotbackmaschine abnormal ist und dass der Motor (26) überlastet Ist, wenn sich die erste Scheibe (36) und die zweite Scheibe langsamer als bei Drehung derselben In einem normalen Zustand drehen.

13. Brotbackmaschine nach einem der Ansprüche 10 -12, wobei die impulsbreite eine auf den Motor (26) ausgeübte Last anzeigt und die Impulsbreite proportional zu einem Laststrom ist.

14. Verfahren zum Steuern einer Brotbackmaschine, die eine Ofenkammer (10) und eine Kammer (20) für elektrische Bauteile, ein Paar paralleler Knetwalzen (11, 13) im inneren der Ofenkammer (20), an denen einander gegenüberliegende Enden eines Mischbeutels (7) angebracht sind, der Brotzutaten enthält, wobei die Knetwalzen (11, 13) die Drehrichtung periodisch umkehren, und einen Walzenantriebsteil (25) in der Kammer (20) für elektrische Bautelle hat, der die Knetwalzen (11, 13) dreht, **dadurch gekennzeichnet, dass** das Verfahren umfasst:
Erfassen einer Drehgeschwindigkeit einer der Knetwalzen (11,13); und
Anhalten des Trommelantriebstells (25), wenn die erfasste Drehgeschwindigkeit höher ist als eine vorgegebene Drehgeschwlndlgkeit.

15. Verfahren nach Anspruch 14, wobei die Brotbackmaschine umfasst:
einen Scheibenteil (41), der sich mit der einen der Knetwatzen (11, 13) dreht und eine Vielzahl von Vorsprüngen (44,48) um seinen Umfang herum in gleichmäßigen Abständen aufweist; und
einen Scheibensensor (63, 65), der entsprechend einer Unterbrechung von Licht, das auf den Scheibenteil (41) zu emlttlert wird, durch die Vorsprünge (44, 48) des Scheibenteils ein Impulssignal ausgibt.

16. Verfahren nach Anspruch 15, wobei Erfassen einer Drehgeschwindigkeit das Bestimmen einer Impulsbreite des Irnpulssignals umfasst.

17. Verfahren nach Anspruch 16, das des Weiteren Erzeugen einer Warnung umfasst, wenn die Irnpulsbrefte größer ist als eine vorgegebene Impulsbreite.

18. Verfahren nach einem der Ansprüche 15 -17, wobei der Scheibenteil (41) umfasst:
eine erste Scheibe (36), die einen einzelnen Vorsprung (44) aufweist; und
eine zweite Scheibe (37), die eine Vielzahl von Vorsprüngen (48) in gleichmäßigen Abständen aufwelst.

19. Verfahren nach Anspruch 18, wobei der Scheibensensor (63, 65) einen 1Ichtemittierenden Teil (63a, 65a) und einen lichtempfangenden Teil (63b, 65b) umfasst, die einander zugewandt sind, sich der Scheibenteil (41) zwischen ihnen befindet, und der Scheibensensor (63. 65) ein Impulssignal ausgibt, wenn der wenigstens eine Vorsprung (44, 48) des Scheibenteils (41) von dem lichtemittierenden Teil (63a, 65a) zu dem lichtempfangenden Tell (63b, 65b) emittiertes Licht unterbricht.

20. Verfahren nach Anspruch 18 oder Anspruch 19, wobei der Scheibensensor (63, 65) eine Umdrehung der einen der Knetwalzen (11, 13) unter Verwendung der ersten Scheibe (36) erfasst, der Scheibensensor (63, 65) Drehung der einen der Knetwalzen (11, 13), die kürzer Ist als eine Umdrehung, unter Verwendung der zweiten Scheibe (37) erfasst, der Scheibensensor (63, 65) ein Impulssignal pro Umdrehung der einen der Knetwalzen (11, 13) ausgibt und eine Anzahl von Impulssignalen pro Umdrehung der einen der Knetwalzen (11, 13) ausgibt, die der Anzahl von Vorsprüngen (48) an der zweiten Scheibe entspricht.

21. Verfahren nach einem der Anspruche 18 - 20, wobei die Knetwalzen (11, 13) eine obere Knetwalze (11) und eine untere Knetwalze (13) umfassen.

22. Verfahren nach Anspruch 21, wobei der Walzenantriebsteil (25) einen Motor (26), der die untere Knetwalze (13) dreht, sowie einen Riemen (27) umfasst, der die untere Knetwalze (13) mit der oberen Knetwalze (11) verbindet, und der Riemen (27) eine Drehbewegung der unteren Knetwalze (13) auf die obere Knetwalze (11) überträgt.

23. Verfahren nach Anspruch 22, wobei die Steuereinrichtung (70) eine Drehgeschwindigkeit der oberen Knetwalze (11) unter Verwendung der Ausgangs-Impulssignale bestimmt und den Motor (26) so steuert, dass er die obere Knetwalze (11) und die untere Knetwalze (13) entsprechend der bestimmten Drehgeschwindigkeit dreht.

24. Verfahren nach Anspruch 22 oder Anspruch 23, wobei, wenn die Impulsbreite der Impulssignale größer ist als die vorgegebene Impulsbreite, die Steuereinrichtung (70) feststellt, dass ein Zustand der Brotbackmaschine abnormal Ist und dass der Motor (26) überlastet ist, wenn sich die erste Scheibe (36) und die zweite Scheibe (37) langsamer als bei Drehung in einem normalen Zustand drehen.
